(19) Europäisches Patentamt
European Patent Office
Office européen des brevets

(11) EP 3 016 389 A1

(12) EUROPEAN PATENT APPLICATION
published in accordance with Art. 153(4) EPC

(43) Date of publication:
04.05.2016 Bulletin 2016/18

(51) Int Cl.:
H04N 19/105 (2014.01)     H04N 19/136 (2014.01)
H04N 19/172 (2014.01)     H04N 19/85 (2014.01)

(21) Application number: 14817997.1

(22) Date of filing: 26.06.2014

(86) International application number:
PCT/JP2014/067048

(87) International publication number:
WO 2014/208688 (31.12.2014 Gazette 2014/53)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME

(30) Priority: 27.06.2013 JP 2013135385

(71) Applicant: KDDI Corporation
Tokyo 160-0023 (JP)

(72) Inventors:
• SATO, Masaharu
  Fujimino-shi
  Saitama 356-8502 (JP)

• YOSHINO, Tomonobu
  Fujimino-shi
  Saitama 356-8502 (JP)
• NAITO, Sei
  Fujimino-shi
  Saitama 356-8502 (JP)

(74) Representative: Pitchford, James Edward et al
Mathys & Squire LLP
The Shard
32 London Bridge Street
London SE1 9SG (GB)

(54) **VIDEO CODING DEVICE, VIDEO DECODING DEVICE, VIDEO SYSTEM, VIDEO CODING METHOD, VIDEO DECODING METHOD, AND PROGRAM**

(57) The coding performance of cross-fade video is improved by enhancing the predictive accuracy of cross-fade video. A video coding device and a video decoding device that allow weighted motion compensation are provided with fade video estimation means for estimating, from cross-fade video, fade-out video and fade-in video constituting the cross-fade video. Furthermore, the video coding device and the video decoding device respectively generate an nTth frame of fade-out prediction video from an (n-1)Tth frame of fade-out prediction video, and generate an nTth frame of fade-in prediction video from an nTth frame of cross-fade video and the nTth frame of fade-out prediction video.

FIG. 3

**Description**

TECHNICAL FIELD

The present invention relates to a video coding device, a video decoding device, a video system, a video coding method, a video decoding method, and a program.

BACKGROUND ART

Heretofore, research has been conducted into increasing the performance of video coding system technology, and systems such as H.264 (e.g., see Non-patent Reference 1) and HEVC (e.g., see Non-patent Reference 2) have been standardized. With such video coding systems, the compression rate is improved by generating prediction video for video to be coded and coding the difference between this prediction video and the video to be coded. The information amount required for compression can be reduced if there is little difference between the prediction video and the video to be coded, enabling coding efficiency to be improved as a result.

However, the video coding systems shown in Non-patent Reference 1 and Non-patent Reference 2 are premised on being able to track the motion of an object by block matching. Thus, when motion compensation is simply applied to video in which the luminance of the entire screen changes over time such as fade-out and fade-in video, coding performance may decrease. In view of this, technology for coding at least one cross-fade video temporally arranged between fade-out start video and fade-in end video (e.g., see Patent Reference 1) and technology for providing an optimal weight coefficient that depends on a reference image using a combination table of reference images and weights for reference images (e.g., see Patent Reference 2) have been proposed.

PRIOR ART DOCUMENTS

PATENT REFERENCE

Patent Reference 1: Japanese Patent Laid-Open No. 2006-509467
Patent Reference 2: Japanese Patent Laid-Open No. 2012-161092

NON-PATENT REFERENCE

Non-patent Reference 1: Joint Video Team (JVT) of ISO/IEC MPEG & ITU-T VCEG, "Text of ISO/IEC 14496-10 Advanced Video Coding".
Non-patent Reference 2: High Efficiency Video Coding (HEVC) text specification draft 6, JCTVC-H1003.

DISCLOSURE OF INVENTION

PROBLEMS THAT THE INVENTION IS TO SOLVE

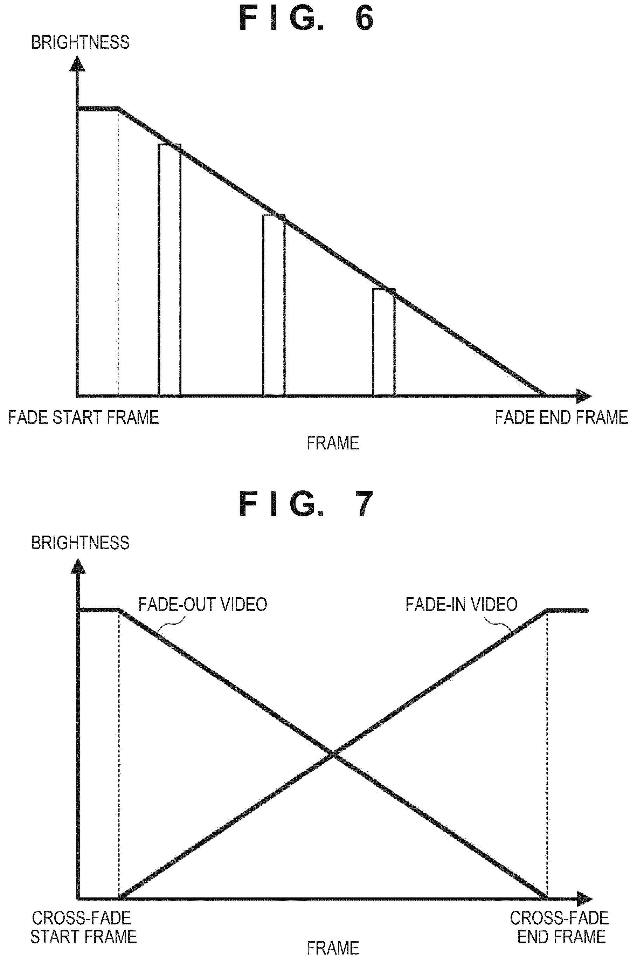

Here, with video in which the brightness of the entire screen changes linearly over time as shown in Fig. 6, for example, predictive accuracy can be enhanced by simply applying weighted coefficients to inter-frame prediction error. On the other hand, with cross-fade video in which fade-out and fade-in occur simultaneously as shown in Fig. 7, predictive accuracy cannot be adequately enhanced by simply applying weighted coefficients to inter-frame prediction error.

The technology shown in Patent Reference 1 is effective in enhancing predictive accuracy in the case where the cross-fade video to be coded, the fade-out start video, the fade-in end video are similar, that is, with video in which there is almost no motion. However, predictive accuracy decreases as the difference between the cross-fade video to be coded, the fade-out start video, and the fade-in end video increases due to camera work or the like.

The technology shown in Patent Reference 2 does not take into consideration the motion vectors of blocks to be coded that include two different types of motions. Thus, predictive accuracy decreases with the cross-fade video to be coded in which two different types of motions are included in one block to be coded.

The present invention was made in view of the above-mentioned problems, and has an object to improve the coding performance of cross-fade video by enhancing the predictive accuracy of cross-fade video.

MEANS OF SOLVING THE PROBLEMS

The present invention proposes the following items in order to solve the above problems.

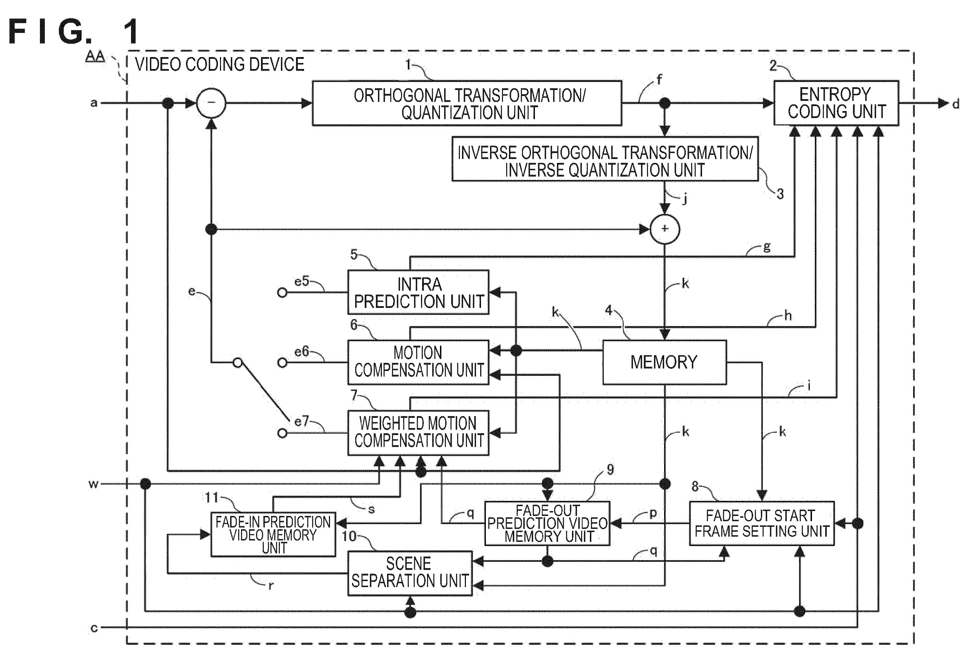

(1) The present invention proposes a video coding device (e.g., equivalent to video coding device AA in Fig. 1) that allows weighted motion compensation and includes fade video estimation means (e.g., equivalent to fade-out start frame setting unit 8 and scene separation unit 10 in Fig. 1) for estimating, from cross-fade video, fade-out video and fade-in video constituting the cross-fade video.

According to this invention, fade-out video and fade-in video constituting cross-fade video are estimated from the cross-fade video. The predictive accuracy of cross-fade video can thus be enhanced by using the estimated fade-out video and fade-in video as reference frames in weighted motion compensation, enabling the coding performance of cross-fade video to be improved.

(2) The present invention proposes a video coding device according to which, in the video coding device of (1), the fade video estimation means includes fade-out start frame setting means (e.g., equivalent to fade-out start frame setting unit 8 in Fig. 1) for distinguishing whether a frame to be coded is cross-fade video, and estimating fade-out video based on a mixing coefficient when the frame to be coded is distinguished to be cross-fade video, and scene separation means (e.g., equivalent to scene separation unit 10 in Fig. 1) for estimating fade-in video based on the mixing coefficient, using the cross-fade video and the fade-out video estimated by the fade-out start frame setting means.

According to this invention, in the video coding device of (1), fade-out video is estimated based on a mixing coefficient, and fade-in video is estimated based on the mixing coefficient, using the cross-fade video and the estimated fade-out video. Fade-out video and fade-in video can thus be estimated in consideration of the ratio in which fade-out video and fade-in video are combined in the cross-fade video. Accordingly, fade-out video and fade-in video can be estimated with high accuracy.

(3) The present invention proposes a video coding device according to which, in the video coding device of (2), the fade-out start frame setting means performs weighted motion compensation prediction using the mixing coefficient on an (n-1)Tth frame of fade-out video (where n is an arbitrary integer satisfying n≥2, and T is an arbitrary integer satisfying T≥1) to generate an nTth frame of fade-out video, and the scene separation means derives, as an nTth frame of fade-in video, a difference of an nTth frame of cross-fade video and the nTth frame of fade-out video that was multiplied by the mixing coefficient.

According to this invention, in the video coding device of (2), weighted motion compensation prediction is performed using a mixing coefficient on an (n-1)Tth frame of fade-out video to generate an nTth frame of fade-out video. Also, the difference of an nTth frame of cross-fade video and the nTth frame of fade-out video that was multiplied by the mixing coefficient is derived as an nTth frame of fade-in video. Similar effects to the above-mentioned effects can thereby be achieved.

(4) The present invention proposes a video coding device in which the video coding device of (3) includes weighted motion compensation means (e.g., equivalent to weighted motion compensation unit 7 in Fig. 1) for using the fade-out video and the fade-in video estimated by the fade video estimation means as reference frames for weighted motion compensation.

According to this invention, in the video coding device of (3), the estimated fade-out video and fade-in video are used as reference frames for weighted motion compensation. Similar effects to the above-mentioned effects can thereby be achieved.

(5) The present invention proposes a video coding device according to which, in the video coding device of (4), the weighted motion compensation means uses the nTth frame of fade-out video estimated by the fade-out start frame setting means and the nTth frame of fade-in video estimated by the scene separation means as the reference frames for the nTth frame to an nT+(T-1)th frame.

According to this invention, in the video coding device of (4), the estimated nTth frame of fade-out video and the estimated nTth frame of fade-in video are used as reference frames for the nTth frame to an nT+(T-1)th frame. Thus, the frequency with which estimation of the fade-out video and fade-in video that are used as reference frames is performed can be controlled by appropriately setting n and T, and improvement in the coding performance of cross-fade video and suppression of an increase in the processing load due to the above-mentioned estimation can be adjusted.

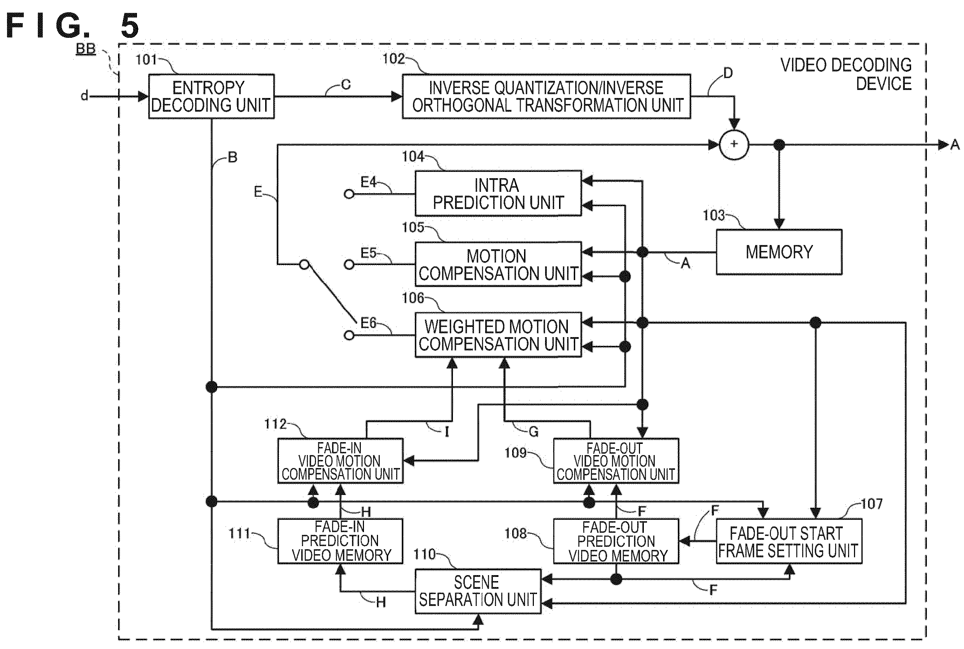

(6) The present invention proposes a video decoding device (e.g., equivalent to video decoding device BB in Fig. 5) including fade video estimation means (e.g., equivalent to fade-out start frame setting unit 107 and scene separation unit 110 in Fig. 5) for estimating, from cross-fade video included in decoded video, fade-out video and fade-in video constituting the cross-fade video.

According to this invention, fade-out video and fade-in video constituting cross-fade video are estimated from the cross-fade video. The predictive accuracy of cross-fade video can thus be enhanced by using the estimated fade-out video and fade-in video as reference frames in weighted motion compensation, enabling the coding performance of cross-fade video to be improved.

(7) The present invention proposes a video decoding device according to which, in the video decoding device of (6), the fade video estimation means includes fade-out start frame setting means (e.g., equivalent to fade-out start frame setting unit 107 in Fig. 5) for distinguishing whether a frame to be decoded is cross-fade video, and estimating fade-out video based on a mixing coefficient when the frame to be decoded is distinguished to be cross-fade video, and scene separation means (e.g., equivalent to scene separation unit 110 in Fig. 5) for estimating fade-in video based on the mixing coefficient, using the cross-fade video and the fade-out video estimated by the fade-out start frame setting means.

According to this invention, in the video decoding device of (6), fade-out video is estimated based on a mixing coefficient, and fade-in video is estimated based on the mixing coefficient, using the cross-fade video and the estimated fade-out video. Fade-out video and fade-in video can thus be estimated in consideration of the ratio in which fade-out video and fade-in video are combined in the cross-fade video. Accordingly, fade-out video and fade-in video can be estimated with high accuracy.

(8) The present invention proposes a video decoding device according to which, in the video decoding device of (7), the fade-out start frame setting means performs weighted motion compensation prediction using the mixing coefficient on an (n-1)Tth frame of fade-out video (where n is an arbitrary integer satisfying $n \geq 2$, and T is an arbitrary integer satisfying $T \geq 1$) to generate an nTth frame of fade-out video, and the scene separation means derives a difference of an nTth frame of cross-fade video and the nTth frame of fade-out video that was multiplied by the mixing coefficient as an nTth frame of fade-in video.

According to this invention, in the video decoding device of (7), weighted motion compensation prediction is performed using a mixing coefficient on an (n-1)Tth frame of fade-out video to generate an nTth frame of fade-out video. Also, the difference of an nTth frame of cross-fade video and the nTth frame of fade-out video that was multiplied by the mixing coefficient is derived as an nTth frame of fade-in video. Similar effects to the above-mentioned effects can thereby be achieved.

(9) The present invention proposes a video decoding device in which the video decoding device of (8) includes fade-out video motion compensation means (e.g., equivalent to fade-out video motion compensation unit 109 in Fig. 5) for performing motion compensation in accordance with a motion vector on the fade-out video estimated by the fade-out start frame setting means, and fade-in video motion compensation means (e.g., equivalent to fade-in video motion compensation unit 112 in Fig. 5) for performing motion compensation in accordance with a motion vector on the fade-in video estimated by the scene separation means.

According to this invention, in the video decoding device of (8), motion compensation is performed in accordance with a motion vector on the estimated fade-out video and fade-in video. Similar effects to the above-mentioned effects can thereby be achieved.

(10) The present invention proposes a video decoding device in which the video decoding device of (9) includes weighted motion compensation means (e.g., equivalent to weighted motion compensation unit 106 in Fig. 5) for using the fade-out video and the fade-in video estimated by the fade video estimation means as reference frames for weighted motion compensation.

According to this invention, in the video decoding device of (9), the estimated fade-out video and fade-in video are used as reference frames for weighted motion compensation. Similar effects to the above-mentioned effects can thereby be achieved.

(11) The present invention proposes a video decoding device according to which, in the video decoding device of (10), the weighted motion compensation means uses the nTth frame of fade-out video estimated by the fade-out start frame setting means and the nTth frame of fade-in video estimated by the scene separation means as the reference frames for the nTth frame to an nT+(T-1)th frame.

According to this invention, in the video decoding device of (10), the estimated nTth frame of fade-out video and the estimated nTth frame of fade-in video are used as reference frames for the nTth frame to an nT+(T-1)th frame. Thus, the frequency with which estimation of the fade-out video and fade-in video that are used as reference frames is performed can be controlled by appropriately setting n and T, and improvement in the coding performance of cross-fade video and suppression of an increase in the processing load due to the above-mentioned estimation can be adjusted.

(12) The present invention proposes a video system including a video coding device (e.g., equivalent to video coding device AA in Fig. 1) and a video decoding device (e.g., equivalent to video decoding device BB in Fig. 5) that allow weighted motion compensation, the video coding device including coding-side fade video estimation means (e.g., equivalent to fade-out start frame setting unit 8 and scene separation unit 10 in Fig. 1) for estimating, from cross-fade video, fade-out video and fade-in video constituting the cross-fade video, and the video decoding device including decoding-side fade video estimation means (e.g., equivalent to fade-out start frame setting unit 107 and scene separation unit 110 in Fig. 5) for estimating, from cross-fade video included in decoded video, fade-out video and fade-in video constituting the cross-fade video.

According to this invention, in both the video coding device and video decoding device, fade-out video and fade-in video constituting cross-fade video are estimated from the cross-fade video. The predictive accuracy of cross-fade video can thus be enhanced by using the estimated fade-out video and fade-in video as reference frames in weighted motion compensation, enabling the coding performance of cross-fade video to be improved.

(13) The present invention proposes a video coding method of a video coding device (e.g., equivalent to video coding device AA in Fig. 1) that includes fade video estimation means (e.g., equivalent to fade-out start frame setting unit 8 and scene separation unit 10 in Fig. 1) and allows weighted motion compensation, the method including the step of the fade video estimation means estimating, from cross-fade video, fade-out video and fade-in video constituting the cross-fade video.

According to this invention, fade-out video and fade-in video constituting cross-fade video are estimated from the cross-fade video. The predictive accuracy of cross-fade video can thus be enhanced by using the estimated fade-out video and fade-in video as reference frames in weighted motion compensation, enabling the coding performance of cross-fade video to be improved.

(14) The present invention proposes a video decoding method of a video decoding device (e.g., equivalent to video decoding device BB in Fig. 5) that includes fade video estimation means (e.g., equivalent to fade-out start frame setting unit 107 and scene separation unit 110 in Fig. 5) and allows weighted motion compensation, the method including the step of the fade video estimation means estimating, from cross-fade video included in decoded video, fade-out video and fade-in video constituting the cross-fade video.

According to this invention, fade-out video and fade-in video constituting cross-fade video are estimated from the cross-fade video. The predictive accuracy of cross-fade video can thus be enhanced by using the estimated fade-out video and fade-in video as reference frames in weighted motion compensation, enabling the coding performance of cross-fade video to be improved.

(15) The present invention proposes a program for causing a computer to execute a video coding method of a video coding device (e.g., equivalent to video coding device AA in Fig. 1) that includes fade video estimation means (e.g., equivalent to fade-out start frame setting unit 8 and scene separation unit 10 in Fig. 1) and allows weighted motion compensation, the program causing the computer to execute the step of the fade video estimation means estimating, from cross-fade video, fade-out video and fade-in video constituting the cross-fade video.

According to this invention, fade-out video and fade-in video constituting cross-fade video are estimated from the cross-fade video. The predictive accuracy of cross-fade video can thus be enhanced by using the estimated fade-out video and fade-in video as reference frames in weighted motion compensation, enabling the coding performance of cross-fade video to be improved.

(16) The present invention proposes a program for causing a computer to execute a video decoding method of a video decoding device (e.g., equivalent to video decoding device BB in Fig. 5) that includes fade video estimation means (e.g., equivalent to fade-out start frame setting unit 107 and scene separation unit 110 in Fig. 5) and allows weighted motion compensation, the program causing the computer to execute the step of the fade video estimation means estimating, from cross-fade video included in decoded video, fade-out video and fade-in video constituting the cross-fade video.

According to this invention, fade-out video and fade-in video constituting cross-fade video are estimated from the cross-fade video. The predictive accuracy of cross-fade video can thus be enhanced by using the estimated fade-out video and fade-in video as reference frames in weighted motion compensation, enabling the coding performance of cross-fade video to be improved.

EFFECTS OF THE INVENTION

According to the present invention, the predictive accuracy of cross-fade video can be enhanced, enabling the coding performance of cross-fade video to be improved.

BRIEF DESCRIPTION OF DRAWINGS

Fig. 1 is a block diagram of a video coding device according to one embodiment of the present invention.
Fig. 2 is a diagram for illustrating operations of the video coding device according to the embodiment.
Fig. 3 is a flowchart of the video coding device according to the embodiment.
Fig. 4 is a diagram for illustrating operations of the video coding device according to the embodiment.
Fig. 5 is a block diagram of a video decoding device according to one embodiment of the present invention.
Fig. 6 is a diagram for illustrating video in which the brightness of the entire screen changes linearly.

Fig. 7 is a diagram for illustrating cross-fade video in which fade-out and fade-in occur simultaneously.

MODE FOR CARRYING OUT THE INVENTION

Hereinafter, embodiments of the present invention will be described with reference to the drawings. Note that constituent elements in the following embodiments can be replaced with existing constituent elements or the like as appropriate, and that various variations including combinations with other existing constituent elements are possible. Accordingly, the contents of the invention described in the claims are not limited by the description of the following embodiments.

Configuration and Operations of Video Coding Device AA

Fig. 1 is a block diagram of a video coding device AA according to one embodiment of the present invention. The video coding device AA is provided with an orthogonal transformation/quantization unit 1, an entropy coding unit 2, an inverse orthogonal transformation/inverse quantization unit 3, a memory 4, an intra prediction unit 5, a motion compensation unit 6, a weighted motion compensation unit 7, a fade-out start frame setting unit 8, a fade-out prediction video memory unit 9, a scene separation unit 10, and a fade-in prediction video memory unit 11.

The orthogonal transformation/quantization unit 1 receives input of a difference signal of a prediction value e relative to input video a. The prediction value e is a value selected as the value having the highest predictive accuracy from a below-mentioned prediction value e5 that is output from the intra prediction unit 5, a below-mentioned prediction value e6 that is output from the motion compensation unit 6, and a below-mentioned prediction value e7 that is output from the weighted motion compensation unit 7. The orthogonal transformation/quantization unit 1 orthogonally transforms the above-mentioned difference signal to derive a transform coefficient, quantizes this transform coefficient, and outputs an orthogonally transformed and quantized difference signal f.

The entropy coding unit 2 receives input of the orthogonally transformed and quantized difference signal f and prediction information. Prediction information refers to prediction information g relating to the intra prediction direction, a motion vector h, a motion vector and weight coefficient i, a mixing coefficient w indicating the degree of fading, and cross fade frame information c, with these respective signals being discussed later. This entropy coding unit 2 performs variable-length coding or arithmetic coding on the orthogonally transformed and quantized difference signal f and the prediction information, writes the result thereof as a compressed data stream in accordance with coding syntax, and outputs the result as compressed data d.

The inverse orthogonal transformation/inverse quantization unit 3 inputs the orthogonally transformed and quantized difference signal f. This inverse orthogonal transformation/inverse quantization unit 3 inverse quantizes and inverse orthogonally transforms the orthogonally transformed and quantized difference signal f, and outputs the result as an inverse quantized and inverse transformed difference signal j.

The memory 4 receives input of a local decoded video k. The local decoded video k is the sum of the prediction value e and the inverse quantized and inverse transformed difference signal j. The memory 4 stores the input local decoded video k, and supplies the stored local decoded video k to the intra prediction unit 5, the motion compensation unit 6, the weighted motion compensation unit 7, the fade-out start frame setting unit 8, the scene separation unit 10 and the fade-in prediction video memory unit 11 when needed.

The intra prediction unit 5 receives input of the local decoded video k read out from the memory 4. This intra prediction unit 5 generates the prediction value e5 relating to intra prediction, and outputs the prediction value e5 relating to intra prediction and the prediction information g relating to the intra prediction direction, using the local decoded video k.

The motion compensation unit 6 receives input of the input video a and the local decoded video k read out from the memory 4. This motion compensation unit 6 calculates the motion vector h by block matching between the input video a and the local decoded video k, calculates the prediction value e6 of the block to be coded by performing motion compensation on the local decoded video k according to the motion vector h, and outputs the prediction value e6 of the block to be coded and the motion vector h. Note that a sum of absolute differences SAD is used as a rating scale for block matching.

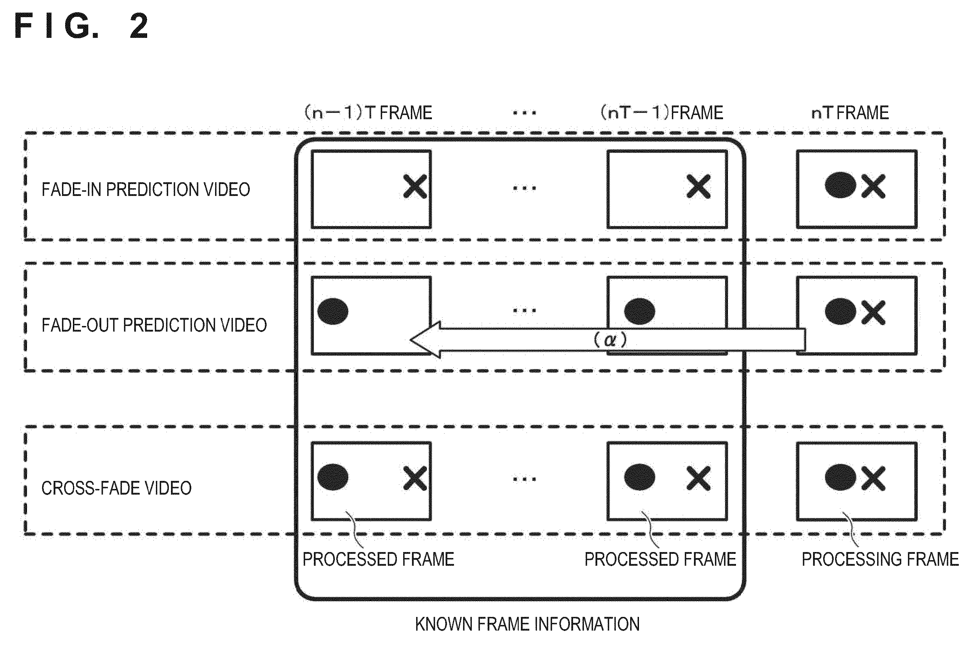

The fade-out start frame setting unit 8 generates prediction video for an nTth frame of fade-out video every T frames, using prediction video for an (n-1)Tth frame of fade-out video (where n is an arbitrary integer satisfying $n \geq 2$, and T is an arbitrary integer satisfying $T \geq 1$), as represented by ($\alpha$) in Fig. 2. Specifically, the fade-out start frame setting unit 8 receives input of below-mentioned prediction video q for fade-out video read out from the fade-out prediction video memory unit 9, the local decoded video k read out from the memory 4, the cross fade frame information c, and the mixing coefficient w. This fade-out start frame setting unit 8 distinguishes whether a processing frame is cross-fade video and whether a frame number of the processing frame is an integer multiple of T, based on the cross fade frame information c. The cross fade frame information c in the video coding device AA is information showing from which frame to which frame of the input video cross fading occurs, and includes information on the number of the frame in which cross fading starts, and information on the number of the frame in which cross fading ends. When it is distinguished that the processing frame is cross-fade video and the frame number is an integer multiple of T, weighted motion compensation prediction is performed using the mixing coefficient w on the prediction video q for the (n-1)Tth frame of fade-out video to generate prediction video p for an nTth frame of fade-out video, and the prediction video p is output. Note that when n=1, that is, when generating a Tth frame of fade-out video, video of the frame immediately before the frame in which cross fading starts is used. Also, although, in this embodiment, a mixing coefficient of alpha blending is used as the mixing coefficient w, the present invention is not limited thereto, and any information indicating the ratio in which fade-out video and fade-in video is combined in cross-fade video may be used.

The fade-out prediction video memory unit 9 generates prediction video for a uth frame of fade-out video (where u is an arbitrary integer that satisfies $nT \leq u < nT+1$) every frame, using the prediction video for the nTth frame of fade-out video. Specifically, the fade-out prediction video memory unit 9 receives input of the local decoded video k read out from the memory 4 and the prediction video p for fade-out video. This fade-out prediction video memory unit 9 stores the input prediction video p for the fade-out video. Then, when needed, motion compensation prediction is performed on the prediction video for the nTth frame of fade-out video to generate prediction video q for a uth frame of fade-out video, and the prediction video q is supplied to the weighted motion compensation unit 7, the fade-out start frame setting unit 8, and the scene separation unit 10.

The scene separation unit 10 generates prediction video for an nTth frame of fade-in video every T frames, using the prediction video for the nTth frame of fade-out video. Specifically, the scene separation unit 10 receives input of the mixing coefficient w, the local decoded video k read out from the memory 4, and the prediction video q for the fade-out video read out from the fade-out prediction video memory unit 9. This scene separation unit 10 outputs the difference of the local decoded video k, which is the nTth frame of cross-fade video, and the prediction video q for the nTth frame of fade-out video as prediction video r for the nTth frame of fade-in video. Here, the fade effect is not reflected in the prediction video q for the nTth frame of fade-out video. In view of this, the prediction video for the nTth frame of fade-out video is multiplied by a mixing coefficient w(n), based on the equation of alpha blending shown in the following equation (1). The difference of the nTth frame of cross-fade video and the prediction video q for the nTth frame of fade-out video that was multiplied by the mixing coefficient w is then derived, and set as the prediction video r for the nTth frame of fade-in video.

Equation 1

$$f(nT) = w(nT)f_a(nT) + (1 - w(nT)f_b(nT)) \quad \cdot \cdot \cdot (1)$$

Note that, in equation (1), f(nT) indicates the nTth frame of cross-fade video, $f_a(nT)$ indicates the nTth frame of fade-in video, and $f_b(nT)$ indicates the nTth frame of fade-out video.

The fade-in prediction video memory unit 11 generates prediction video for a uth frame of fade-in video every frame, using the prediction video for the nTth frame of fade-in video. Specifically, the fade-in prediction video memory unit 11 receives input of the local decoded video k read out from the memory 4 and the prediction video r for the fade-in video. This fade-in prediction video memory unit 11 stores the prediction video r for the input fade-in video. Then, when needed, motion compensation prediction is performed on the prediction video for the nTth frame of fade-in video to generate prediction video s for a uth frame of fade-in video, and the prediction video s is supplied to the weighted motion compensation unit 7.

The weighted motion compensation unit 7 receives input of the input video a, the local decoded video k read out from the memory 4, the prediction video q for the fade-out video read out from the fade-out prediction video memory unit 9, the prediction video s for the fade-in video read out from the fade-in prediction video memory unit 11, and the mixing coefficient w. First, this weighted motion compensation unit 7 calculates a motion vector by weighted block matching between the prediction video for the uth frame of fade-out video and the prediction video for a (u-1)th frame of fade-out video, and calculates a motion vector by weighted block matching between the prediction video for the uth frame of fade-in video and the prediction video for a (u-1)th frame of fade-in video. Next, motion compensation is performed according to these motion vectors, and a prediction value for the uth frame of fade-out video and a prediction value for the uth frame of fade-in video are calculated. Next, prediction video for a uth frame of cross-fade video is generated based on alpha blending, using the prediction value for the uth frame of fade-out video, the prediction value for the uth frame of fade-in video, and the mixing coefficient w. Next, the prediction video for the uth frame of cross-fade video is output as the prediction value e7 of the block to be coded, and the calculated motion vector and weight coefficient i is output.

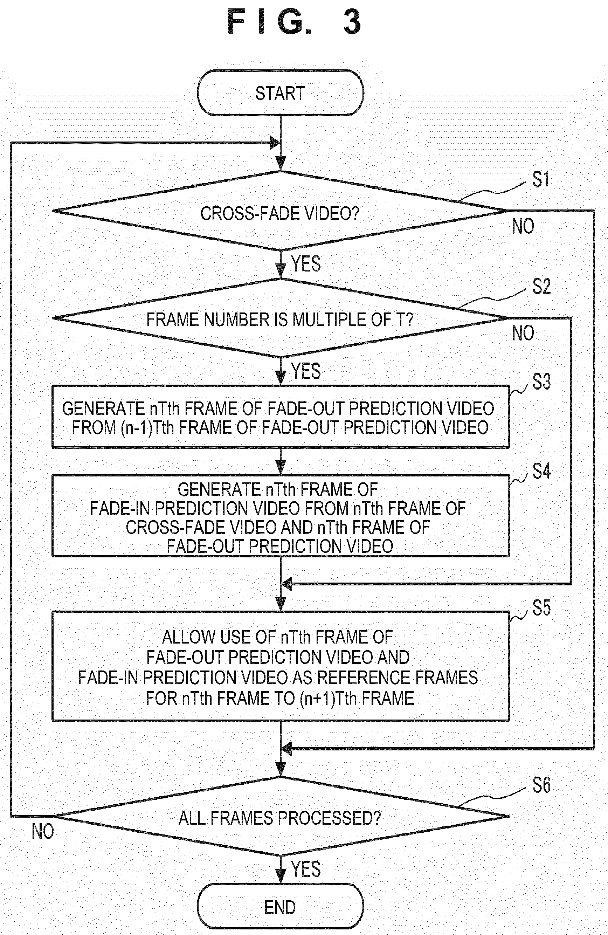

Fig. 3 is a flowchart showing some of the operations of the video coding device AA provided with the above configuration.

In step S1, the video coding device AA distinguishes, with the fade-out start frame setting unit 8, whether a processing frame is cross-fade video. If the processing frame is distinguished to not be cross-fade video, the processing moves to step S6, and if the processing frame is distinguished to be cross-fade video, the processing moves to step S2.

In step S2, the video coding device AA distinguishes, with the fade-out start frame setting unit 8, whether the frame number of the processing frame is an integer multiple of T. If the frame number is distinguished to not be an integer multiple of T, the processing moves to step S5, and if the frame number is distinguished to be an integer multiple of T, the processing moves to step S3.

In step S3, the video coding device AA performs, with the fade-out start frame setting unit 8, weighted motion compensation prediction using a mixing coefficient on the prediction video for the (n-1)Tth frame of fade-out video to generate prediction video for an nTth frame of fade-out video, and the processing moves to step S4.

In step S4, the video coding device AA derives, with the scene separation unit 10, the difference of the local decoded video, which is the nTth frame of cross-fade video, and the prediction video for the nTth frame of fade-out video as prediction video for the nTth frame of fade-in video, and the processing moves to step S5.

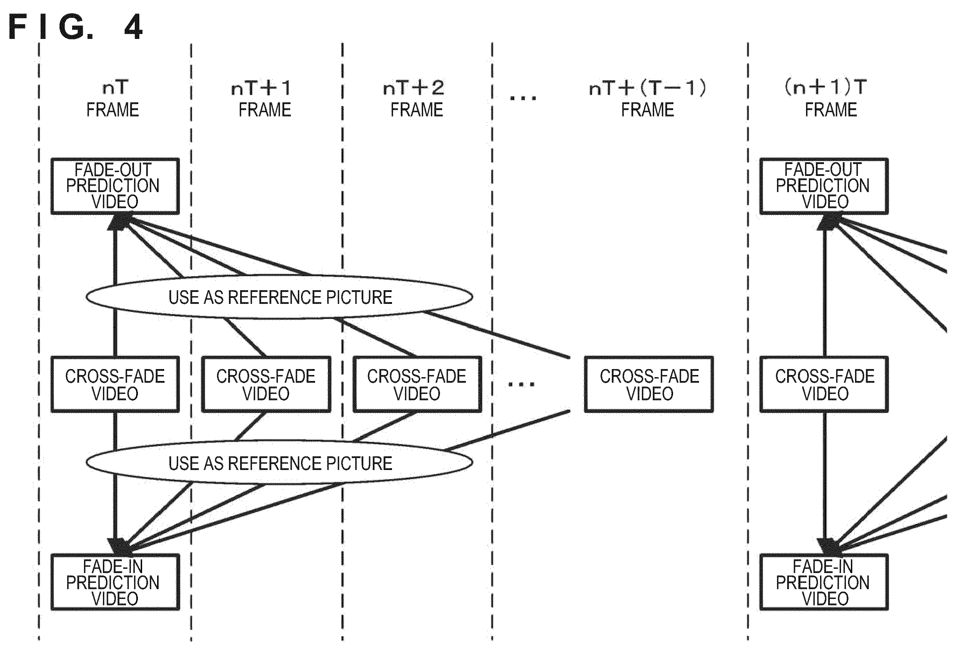

In step S5, the video coding device AA allows, with the fade-out prediction video memory unit 9 and the fade-in prediction video memory unit 11, the weighted motion compensation unit 7 to use the prediction video for the nTth frame of fade-out video and the prediction video for the nTth frame of fade-in video as reference frames for the nTth frame to an nT+(T-1)th frame, as shown in Fig. 4, and the processing moves to step S6.

Specifically, in step S5, the video coding device AA performs, with the fade-out prediction video memory unit 9, motion compensation prediction on the prediction video for the nTth frame of fade-out video to generate prediction video for a uth frame of fade-out video, and the weighted motion compensation unit 7 is able to read out the prediction video for the nTth frame to an nT+(T-1)th frame. Also, the video coding device AA, with the fade-in prediction video memory unit 11, performs motion compensation prediction on the prediction video for the nTth frame of fade-in video to generate prediction video for a uth frame of fade-in video, and the weighted motion compensation unit 7 is able to read out the prediction video for the nTth frame to an nT+(T-1)th frame. The weighted motion compensation unit 7 is thereby able to use the prediction video for the nTth frame of fade-out video and the prediction video for the nTth frame of fade-in video as reference frames when needed, for the nTth frame to an nT+(T-1)th frame.

In step S6, the video coding device AA distinguishes whether all the frames have been processed by the weighted motion compensation unit 7. If it is distinguished that all the frames have been processed, the processing of Fig. 3 is ended, and if it is distinguished that not all the frames have been processed, the processing returns to step S1.

Configuration and Operations of Video Decoding Device BB

Fig. 5 is a block diagram of a video decoding device BB according to one embodiment of the present invention. The video decoding device BB is provided with an entropy decoding unit 101, an inverse quantization/inverse orthogonal transformation unit 102, a memory 103, an intra prediction unit 104, a motion compensation unit 105, a weighted motion compensation unit 106, a fade-out start frame setting unit 107, a fade-out prediction video memory 108, a fade-out video motion compensation unit 109, a scene separation unit 110, a fade-in prediction video memory 111, and a fade-in video motion compensation unit 112.

The entropy decoding unit 101 receives input of the compressed data d. This entropy decoding unit 101 entropy decodes the compressed data d, extracts prediction information B and a difference signal C from the compressed data d, and outputs the prediction information B and the difference signal C.

The inverse quantization/inverse orthogonal transformation unit 102 receives input of the difference signal C. This inverse quantization/inverse orthogonal transformation unit 102 inverse orthogonally transforms and inverse quantizes the difference signal C, and outputs the result as an inverse orthogonally transformed and quantized difference signal D.

The memory 103 receives input of decoded video A. The decoded video A is the sum of inverse orthogonally transformed and quantized difference signal D and a below-mentioned prediction value E. The memory 103 stores the input decoded video A, and supplies the decoded video A to the intra prediction unit 104, the motion compensation unit 105, the weighted motion compensation unit 106, the fade-out start frame setting unit 107, the fade-out video motion compensation unit 109, the scene separation unit 110, and the fade-in video motion compensation unit 112 when needed.

The intra prediction unit 104 receives input of the decoded video A read out from the memory 103 and the prediction information B. This intra prediction unit 104 generates a prediction value E4 from the decoded video A in accordance with the intra prediction direction that is included in the prediction information B, and outputs the generated prediction value E4.

The motion compensation unit 105 receives input of the decoded video A read out from the memory 103 and the prediction information B. This motion compensation unit 105 performs motion compensation on the decoded video A according to the motion vector that is included in the prediction information B to calculate a prediction value E5, and outputs the calculated prediction value E5.

The fade-out start frame setting unit 107 generates prediction video for an nTth frame of fade-out video every T frames, using the prediction video for the (n-1)Tth frame of fade-out video, as represented by ($\alpha$) in Fig. 2. Specifically, the fade-out start frame setting unit 107 receives input of the decoded video A read out from the memory 103, the prediction information B, and a below-mentioned prediction video F for fade-out video read out from the fade-out prediction video memory 108. This fade-out start frame setting unit 107 distinguishes whether a processing frame is cross-fade video and whether the frame number of the processing frame is an integer multiple of T, based on the cross fade frame information that is included in the prediction information B. When it is distinguished that the processing frame is a cross fade frame and the frame number is an integer multiple of T, weighted motion compensation prediction is performed using the mixing coefficient that is included in the prediction information B on the prediction video F for the (n-1)Tth frame of fade-out video to generate prediction video F for an nTth frame of fade-out video, and the generated prediction video F is output. Note that in the case of n=1, that is, in the case of generating the Tth frame of fade-out video, video of the frame immediately before the frame in which cross fading starts is used. Note also that the cross fade frame information in the video decoding device BB is information showing from which frame to which frame of the decoded video A cross fading occurs, and includes information on the number of the frame in which cross fade starts and the information on the number of the frame in which cross fade ends.

The fade-out prediction video memory 108 receives input of the prediction video F for the fade-out video output from the fade-out start frame setting unit 107. This fade-out prediction video memory 108 stores the input prediction video F for the fade-out video, and supplies the stored prediction video F for fade-out video to the fade-out start frame setting unit 107, the fade-out video motion compensation unit 109 and the scene separation unit 110 when needed.

The fade-out video motion compensation unit 109 generates prediction video for a uth frame of fade-out video every frame, using the prediction video for the nTth frame of fade-out video. Specifically, the fade-out video motion compensation unit 109 receives input of the decoded video A read out from the memory 103, the prediction information B, and the prediction video F for the fade-out video read out from the fade-out prediction video memory 108. This fade-out video motion compensation unit 109 performs motion compensation prediction in accordance with the motion vector that is included in the prediction information B on the prediction video F for the nTth frame of fade-out video to generate prediction video G for the uth frame of fade-out video, and outputs the generated prediction video G.

The scene separation unit 110 generates prediction video for an nTth frame of fade-in video every T frames, using the prediction video for the nTth frame of fade-out video. Specifically, the scene separation unit 110 receives input of the decoded video A read out from the memory 103, the prediction information B, and the prediction video F for the fade-out video read out from the fade-out prediction video memory 108. This scene separation unit 110 outputs the difference of the decoded video A, which is the nTth frame of cross-fade video, and the prediction video F for the nTth frame of fade-out video as a prediction video H for the nTth frame of fade-in video. Here, the fade effect is not reflected in the prediction video F for the nTth frame of fade-out video. In view of this, the prediction video for the nTth frame of fade-out video is multiplied by the mixing coefficient w(n) that is included in the prediction information B, based on the equation of alpha blending shown in above-mentioned equation (1). The difference of the nTth frame of cross-fade video and the prediction video F for the nTth frame of fade-out video that was multiplied by the mixing coefficient w is derived, and set as prediction video H for an nTth frame of fade-in video.

The fade-in prediction video memory 111 receives input of the prediction video H for the fade-in video output from the scene separation unit 110. This fade-in prediction video memory 111 stores the input prediction video H for the fade-in video, and supplies the stored prediction video H for the fade-in video to the fade-in video motion compensation unit 112 when needed.

The fade-in video motion compensation unit 112 generates prediction video for a uth frame of fade-in video every frame, using the prediction video for the nTth frame of fade-in video. Specifically, the fade-in video motion compensation unit 112 receives input of the decoded video A read out from the memory 103, the prediction information B, and the prediction video H for the fade-in video read out from the fade-in prediction video memory 111. This fade-in video motion compensation unit 112 performs motion compensation prediction in accordance with the motion vector that is included in the prediction information B on the prediction video H for the nTth frame of fade-in video to generate prediction video I for a uth frame of fade-in video, and outputs the generated prediction video I.

The weighted motion compensation unit 106 receives input of the decoded video A read out from the memory 103, the prediction information B, the prediction video G for fade-out video, and the prediction video I for fade-in video. First, this weighted motion compensation unit 106 calculates a motion vector by weighted block matching between the prediction video for the uth frame of fade-out video and the prediction video for the (u-1)th frame of fade-out video, and calculates a motion vector by weighted block matching between the prediction video for the uth frame of fade-in video and the prediction video for the (u-1)th frame of fade-in video. Next, motion compensation is performed according to these motion vectors, and a prediction value for the uth frame of fade-out video and a prediction value for the uth frame of fade-in video are calculated. Next, prediction video for a uth frame of cross-fade video is generated based on alpha blending, in accordance with the motion vector and weight coefficient that is included in the prediction information B, using the prediction value for the uth frame of fade-out video, the prediction value for the uth frame of fade-in video and the mixing coefficient, and outputs the generated prediction video as a prediction value E6.

Some of the operations of the video decoding device BB provided with the above configuration are the same as some of the operations of the video coding device AA shown in Fig. 3. Specifically, the fade-out start frame setting unit 107, the fade-out video motion compensation unit 109, the scene separation unit 110 and the fade-in video motion compensation unit 112 respectively perform the processing of the steps in Fig. 3 that are respectively performed by the fade-out start frame setting unit 8, the fade-out prediction video memory unit 9, the scene separation unit 10 and the fade-in prediction video memory unit 11 that are provided in the video coding device AA.

According to the video coding device AA and the video decoding device BB, the following effects can be achieved.

The video coding device AA and the video decoding device BB respectively generate, from cross-fade video, prediction video for fade-out video and prediction video for fade-in video that constitute this cross-fade video, and uses the prediction video for the fade-out video and the prediction video for the fade-in video as reference frames in weighted motion compensation. Thus, the predictive accuracy of cross-fade video can be enhanced, enabling the coding performance of cross-fade video to be improved.

Also, the video coding device AA and the video decoding device BB respectively generate prediction video for fade-out video based on a mixing coefficient, and generate prediction video for fade-in video based on the mixing coefficient, using the prediction video for cross-fade video and the fade-out video. Thus, prediction video for fade-out video and prediction video for fade-in video can be generated in consideration of the ratio in which fade-out video and fade-in video are combined in cross-fade video. Accordingly, prediction video for fade-out video and prediction video for fade-in video can be generated with high accuracy.

Also, the video coding device AA and the video decoding device BB respectively use the prediction video for the nTth frame of fade-out video and the prediction video for the nTth frame of fade-in video as reference frames for the nTth frame to an nT+(T-1)th frame. Thus, the frequency with which generation of prediction video for fade-out video and prediction video for fade-in video that are used as reference frames is performed can be controlled by appropriately setting n and T, and improvement in the coding performance of cross-fade video and suppression of an increase in the processing load due to the above-mentioned estimation can be adjusted.

Note that the present invention can be realized by recording processing of the video coding device AA or the video decoding device BB of the present invention on a non-transitory computer-readable recording medium, and causing the video coding device AA or the video decoding device BB to read and execute the program recorded on this recording medium.

Here, a nonvolatile memory such as an EPROM or a flash memory, a magnetic disk such as a hard disk, a CD-ROM, or the like, for example, can be applied as the above-mentioned recording medium. Also, reading and execution of the program recorded on this recording medium can be performed by a processor provided in the video coding device AA or the video decoding device BB.

Also, the above-mentioned program may be transmitted from the video coding device AA or the video decoding device BB that stores the program in storage device or the like to another computer system via a transmission medium or through transmission waves in a transmission medium. Here, the "transmission medium" that transmits the program is a medium having a function of transmitting information such as a network (communication network) like the Internet or a communication channel (communication line) like a telephone line.

Also, the above-mentioned program may be a program for realizing some of above-mentioned functions. Furthermore, the above-mentioned program may be a program that can realize the above-mentioned functions in combination with a program already recorded on the video coding device AA or the video decoding device BB, that is, a so-called patch file (difference program).

Although embodiments of this invention have been described in detail above with reference to the drawings, the specific configuration is not limited to these embodiments, and designs or the like that do not depart from the gist of the invention are intended to be within the scope of the invention.

DESCRIPTION OF THE REFERENCE NUMERALS

| | |
|---|---|
| 7, 106 | Weighted motion compensation unit |
| 8, 107 | Fade-out start frame setting unit |
| 9 | Fade-out prediction video memory unit |
| 10, 110 | Scene separation unit |
| 11 | Fade-in prediction video memory unit |
| 108 | Fade-out prediction video memory |
| 109 | Fade-out video motion compensation unit |
| 111 | Fade-in prediction video memory |
| 112 | Fade-in video motion compensation unit |
| AA | Video coding device |
| BB | Video decoding device |

**Claims**

1. A video coding device that allows weighted motion compensation, comprising:

   fade video estimation means for estimating, from cross-fade video, fade-out video and fade-in video constituting the cross-fade video.

2. The video coding device according to claim 1, wherein the fade video estimation means includes:

   fade-out start frame setting means for distinguishing whether a frame to be coded is cross-fade video, and estimating fade-out video based on a mixing coefficient when the frame to be coded is distinguished to be cross-fade video; and
   scene separation means for estimating fade-in video based on the mixing coefficient, using the cross-fade video and the fade-out video estimated by the fade-out start frame setting means.

3. The video coding device according to claim 2,
   wherein the fade-out start frame setting means performs weighted motion compensation prediction using the mixing coefficient on an (n-1)Tth frame of fade-out video (where n is an arbitrary integer satisfying n≥2, and T is an arbitrary integer satisfying T≥1) to generate an nTth frame of fade-out video, and
   the scene separation means derives, as an nTth frame of fade-in video, a difference of an nTth frame of cross-fade video and the nTth frame of fade-out video that was multiplied by the mixing coefficient.

4. The video coding device according to claim 3, comprising:

   weighted motion compensation means for using the fade-out video and the fade-in video estimated by the fade video estimation means as reference frames for weighted motion compensation.

5. The video coding device according to claim 4, wherein the weighted motion compensation means uses the nTth frame of fade-out video estimated by the fade-out start frame setting means and the nTth frame of fade-in video estimated by the scene separation means as the reference frames for the nTth frame to an nT+(T-1)th frame.

6. A video decoding device that allows weighted motion compensation comprising:

   fade video estimation means for estimating, from cross-fade video included in decoded video, fade-out video and fade-in video constituting the cross-fade video.

7. The video decoding device according to claim 6, wherein the fade video estimation means includes:

   fade-out start frame setting means for distinguishing whether a frame to be decoded is cross-fade video, and estimating fade-out video based on a mixing coefficient when the frame to be decoded is distinguished to be cross-fade video, and
   scene separation means for estimating fade-in video based on the mixing coefficient, using the cross-fade video and the fade-out video estimated by the fade-out start frame setting means.

8. The video decoding device according to claim 7,
   wherein the fade-out start frame setting means performs weighted motion compensation prediction using the mixing coefficient on an (n-1)Tth frame of fade-out video (where n is an arbitrary integer satisfying n≥2, and T is an arbitrary integer satisfying T≥1) to generate an nTth frame of fade-out video, and
   the scene separation means derives a difference of an nTth frame of cross-fade video and the nTth frame of fade-out video that was multiplied by the mixing coefficient as an nTth frame of fade-in video.

9. The video decoding device according to claim 8, comprising:

   fade-out video motion compensation means for performing motion compensation in accordance with a motion vector on the fade-out video estimated by the fade-out start frame setting means; and
   fade-in video motion compensation means for performing motion compensation in accordance with a motion vector on the fade-in video estimated by the scene separation means.

**10.** The video decoding device according to claim 9, comprising:

weighted motion compensation means for using the fade-out video and the fade-in video estimated by the fade video estimation means as reference frames for weighted motion compensation.

**11.** The video decoding device according to claim 10, wherein the weighted motion compensation means uses the nTth frame of fade-out video estimated by the fade-out start frame setting means and the nTth frame of fade-in video estimated by the scene separation means as the reference frames for the nTth frame to an nT+(T-1)th frame.

**12.** A video system comprising a video coding device and a video decoding device that allow weighted motion compensation,
the video coding device including coding-side fade video estimation means for estimating, from cross-fade video, fade-out video and fade-in video constituting the cross-fade video, and
the video decoding device including decoding-side fade video estimation means for estimating, from cross-fade video included in decoded video, fade-out video and fade-in video constituting the cross-fade video.

**13.** A video coding method of a video coding device that includes fade video estimation means and allows weighted motion compensation, the method comprising the step of:

the fade video estimation means estimating, from cross-fade video, fade-out video and fade-in video constituting the cross-fade video.

**14.** A video decoding method of a video decoding device that includes fade video estimation means and allows weighted motion compensation, the method comprising the step of:

the fade video estimation means estimating, from cross-fade video included in decoded video, fade-out video and fade-in video constituting the cross-fade video.

**15.** A program for causing a computer to execute a video coding method of a video coding device that includes fade video estimation means and allows weighted motion compensation, the program causing the computer to execute the step of:

the fade video estimation means estimating, from cross-fade video, fade-out video and fade-in video constituting the cross-fade video.

**16.** A program for causing a computer to execute a video decoding method of a video decoding device that includes fade video estimation means and allows weighted motion compensation, the program causing the computer to execute the step of:

the fade video estimation means estimating, from cross-fade video included in decoded video, fade-out video and fade-in video constituting the cross-fade video.

FIG. 1

VIDEO CODING DEVICE

# F I G. 2

# F I G. 3

START

S1
CROSS-FADE VIDEO? — NO

YES

S2
FRAME NUMBER IS MULTIPLE OF T? — NO

YES

S3
GENERATE nTth FRAME OF FADE-OUT PREDICTION VIDEO
FROM (n-1)Tth FRAME OF FADE-OUT PREDICTION VIDEO

S4
GENERATE nTth FRAME OF
FADE-IN PREDICTION VIDEO FROM nTth FRAME OF
CROSS-FADE VIDEO AND nTth FRAME OF
FADE-OUT PREDICTION VIDEO

S5
ALLOW USE OF nTth FRAME OF
FADE-OUT PREDICTION VIDEO AND
FADE-IN PREDICTION VIDEO AS REFERENCE FRAMES
FOR nTth FRAME TO (n+1)Tth FRAME

S6
ALL FRAMES PROCESSED?
NO

YES

END

FIG. 4

F I G. 5

# F I G.  6

BRIGHTNESS

FADE START FRAME

FADE END FRAME

FRAME

# F I G.  7

BRIGHTNESS

FADE-OUT VIDEO

FADE-IN VIDEO

CROSS-FADE
START FRAME

CROSS-FADE
END FRAME

FRAME

**EP 3 016 389 A1**

## INTERNATIONAL SEARCH REPORT

| International application No. |
|---|
| PCT/JP2014/067048 |

A. CLASSIFICATION OF SUBJECT MATTER
*H04N19/105(2014.01)i, H04N19/136(2014.01)i, H04N19/172(2014.01)i, H04N19/85(2014.01)i*

According to International Patent Classification (IPC) or to both national classification and IPC

B. FIELDS SEARCHED

Minimum documentation searched (classification system followed by classification symbols)
H04N19/00-19/98, H04N5/262-5/28

Documentation searched other than minimum documentation to the extent that such documents are included in the fields searched
Jitsuyo Shinan Koho          1922-1996   Jitsuyo Shinan Toroku Koho   1996-2014
Kokai Jitsuyo Shinan Koho    1971-2014   Toroku Jitsuyo Shinan Koho   1994-2014

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X<br>A | Hirohisa JOZAWA et al., "Dissolve Kukan no Fugoka Hoshiki ni Kansuru Kento", Picture Coding Symposium of Japan (PCSJ96) Shiryo, 1996. 10, P-5.2, pages 77 to 78 | 1,6,12-16<br>2-5,7-11 |
| X<br>A | WO 2004/054225 A2  (THOMSON LICENSING S.A.), 24 June 2004 (24.06.2004), page 7, line 31 to page 10, line 14; fig. 3 to 6<br>& AU 2003290895 A        & MX PA05005988 A<br>& KR 10-2005-0084138 A   & EP 1568222 A<br>& BR 316963 A           & CN 1720730 A<br>& JP 2006-509467 A       & US 2006/0093038 A1 | 1,6,12-16<br>2-5,7-11 |

☒ Further documents are listed in the continuation of Box C.    ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed

"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 02 September, 2014 (02.09.14) | 16 September, 2014 (16.09.14) |

| Name and mailing address of the ISA/ | Authorized officer |
|---|---|
| Japanese Patent Office | |
| Facsimile No. | Telephone No. |

Form PCT/ISA/210 (second sheet) (July 2009)

19

**INTERNATIONAL SEARCH REPORT**

| International application No. |
| --- |
| PCT/JP2014/067048 |

C (Continuation).   DOCUMENTS CONSIDERED TO BE RELEVANT

| Category* | Citation of document, with indication, where appropriate, of the relevant passages | Relevant to claim No. |
| --- | --- | --- |
| A | JP 2007-288402 A  (Sony Corp.),<br>01 November 2007 (01.11.2007),<br>entire text; all drawings<br>(Family: none) | 1-16 |
| A | JP 2008-301425 A  (Nippon Hoso Kyokai),<br>11 December 2008 (11.12.2008),<br>entire text; all drawings<br>(Family: none) | 1-16 |
| A | WO 2013/031325 A1  (NTT Electronics Corp.),<br>07 March 2013 (07.03.2013),<br>entire text; all drawings<br>& JP 2013-48377 A | 1-16 |

Form PCT/ISA/210 (continuation of second sheet) (July 2009)

**EP 3 016 389 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2006509467 A

- JP 2012161092 A